# EUROPÄISCHE PATENTSCHRIFT

(11) **EP 3 095 517 B1**
(45) Veröffentlichungstag und Bekanntmachung des Hinweises auf die Patenterteilung: **08.01.2020**
(21) Anmeldenummer: 15168837.1
(22) Anmeldetag: 22.05.2015
(51) Int. Cl.: B01L 3/00, G02B 21/34

(54) **PROBENTRÄGER MIT EINER REFERENZSTRUKTUR UND VERFAHREN ZUM HERSTELLEN EINES PROBENTRÄGERS MIT EINER REFERENZSTRUKTUR**
SAMPLE CARRIER WITH A REFERENCE STRUCTURE AND METHOD FOR PRODUCING A SAMPLE CARRIER WITH A REFERENCE STRUCTURE
PORTE-ÉCHANTILLONS AYANT UNE STRUCTURE DE RÉFÉRENCE ET PROCÉDÉ DE PRODUCTION D'UN PORTE-ÉCHANTILLONS DOTÉ D'UNE STRUCTURE DE RÉFÉRENCE

(43) Veröffentlichungstag der Anmeldung: 23.11.2016
(73) Patentinhaber: ibidi GmbH, 82166 Gräfelfing (DE); Technische Universität Chemnitz, 09111 Chemnitz (DE)
(72) Erfinder: ENDERLEIN, Tom, 09113 Chemnitz (DE); PHAM, Trung, 81543 München (DE)
(74) Vertreter: Grünecker Patent- und Rechtsanwälte PartG mbB

(56) Entgegenhaltungen:
- EP-A1- 2 008 715
- EP-A1- 2 896 458
- DE-A1- 10 137 864
- US-A1- 2007 092 408
- US-A1- 2015 064 712
- NORBERT KOOP: "Schreib' mal wieder! Neue Laser-Markierungsverfahren und spezielle Mikrobearbeitungen", GIT LABOR-FACHZEITSCHRIFT, Bd. 57, Nr. Oktober 2013, 1. Oktober 2013 (2013-10-01), Seiten 649-652, XP055121027, ISSN: 0016-3538

## Beschreibung

Die Erfindung betrifft ein Verfahren zum Herstellen eines Probenträgers aus Kunststoff sowie einen durch ein solches Verfahren erhaltenen Probenträger.

Probenträger aus Kunststoff werden häufig dazu verwendet, Zellkulturen zu züchten oder Zellen oder Moleküle zu untersuchen, insbesondere unter Verwendung eines Mikroskops. Dafür weisen die Probenträger regelmäßig eine Aufnahme bzw. ein Reservoir auf, in welches die Probe zur Untersuchung eingebracht werden kann. Im einfachsten Fall ist das Reservoir nach oben hin offen. Es ist aber auch möglich, dass Reservoire in Form eines Hohlraums oder Kanals ausgebildet werden. Diese Hohlräume oder Kanäle können üblicherweise über eine Öffnung befüllt werden, welche sich oberhalb, seitlich oder innerhalb des Bodenbereichs des Reservoirs befinden.

Beispielhafte Probenträger sind aus der DE 101 37 864 A1, der EP 2 008 715 A1, der DE 100 04 135 A1, der EP 1 886 792 A2, der EP 1 458 483, der EP 1 880 764 A1 oder der EP 2 604 342 A1 bekannt.

Für hochauflösende Mikroskopieverfahren wie Fluoreszenzmikroskopie, konfokale Mikroskopie oder Durchlichtmikroskopie ist es erforderlich, dass die Bodenbereiche der Reservoire, auf denen die Moleküle oder Zellen liegen bzw. anwachsen, optisch sehr hochwertig sind. Insbesondere dürfen diese Bereiche keine oder nur sehr wenige Verschmutzungen oder Einschlüsse enthalten, die mittels Lichtmikroskopie sichtbar sind.

Um die Proben am Boden des Bodenträgers zu lokalisieren ist es bekannt, Raster vorzusehen, die durch Prägen oder Lasern eingebracht werden. Beispielhafte Strukturen sind in der DE 100 04 135 A1 und der EP 2 008 715 A1 gezeigt.

Beim Einbringen der Rasterlinien mittels eines Lasers kommt es jedoch zu dem Problem, dass oberflächliche Verunreinigungen entstehen können. Insbesondere werden durch thermische Effekte oder durch die Entstehung von Mikroplasmen Kunststofffragmente aus dem Kunststoffkörper herausgelöst, die sich dann auf der Oberfläche des Körpers anlagern, und mit diesem zum Teil so verschmelzen, dass sie nicht mehr entfernt werden können. Derartige Verunreinigungen haben für hochauflösende Mikroskopieverfahren gravierende Nachteile.

Aufgabe der vorliegenden Erfindung ist es daher, ein Verfahren zum Herstellen eines Probenträgers aus Kunststoff bereitzustellen, der eine Referenzstruktur zum Auffinden der Probe aufweist, die mittels eines Lasers gebildet wird, wobei Verunreinigungen des Probenträgers durch die Herstellung der Referenzstruktur weitestgehend vermieden oder reduziert werden.

Diese Aufgabe wird durch ein Verfahren gemäß Anspruch 1 gelöst. Besonders vorteilhafte Weiterbildungen finden sich in den Unteransprüchen.

Die Erfindung stellt somit ein Verfahren zum Herstellen eines Probenträgers aus Kunststoff gemäß Anspruch 1 bereit.

Die Erfinder der vorliegenden Anmeldung haben festgestellt, dass beim Ausbilden der Referenzstruktur mittels eines Lasers Verunreinigungen des Kunststoffkörpers vermieden oder reduziert werden können, wenn anstelle von durchgezogenen Linien, wie sie im Stand der Technik verwendet werden, wenigstens eine mehrfach unterbrochene Linie verwendet wird. Durch die Verwendung einer mehrfach unterbrochenen Linie anstelle einer durchgehenden Linie können insbesondere thermische Effekte sowie die Entstehung von Mikroplasmen reduziert werden, so dass sich bereits keine oder kaum Kunststofffragmente aus dem Kunststoffkörper lösen, die sich auf dem Körper anlagern könnten. Das erfindungsgemäße Verfahren erlaubt somit ein Herstellen von qualitativ hochwertigeren Probenträgern aus Kunststoff, die vorteilhaft für die Anwendung von hochauflösenden Mikroskopieverfahren Verwendung finden können.

Die Referenzstruktur dient dazu, beispielsweise unterschiedliche Beobachtungs- oder Untersuchungsfelder zu definieren und damit ein Lokalisieren und/oder Wiederauffinden einer Probe zu ermöglichen. Die Referenzstruktur kann also insbesondere in dem Bereich des Probenträgers angeordnet werden, der zur Aufnahme einer Probe im Betrieb des Probenträgers ausgebildet oder vorgesehen ist, insbesondere im oder am Boden eines oder mehrerer Reservoire.

Bei der Probe kann es sich insbesondere um eine biologische, chemische oder medizinische Probe handeln, insbesondere um einzelne Zellen.

Als Linie wird hierin eine Struktur bezeichnet deren Längenausdehnung größer ist als deren Breite, insbesondere um wenigstens einen Faktor 3 größer.

Die wenigstens eine mehrfach unterbrochene Linie kann Abschnitte oder Liniensegmente umfassen, die durch Interaktion mit dem Laser erzeugt werden und optisch sichtbar sind. Diese Abschnitte werden von Bereichen getrennt, in denen der Kunststoff nicht durch den Laser behandelt wurde.

Die wenigstens eine mehrfach unterbrochene Linie kann eine Punktlinie, Strichlinie oder eine strichpunktierte Linie sein. Als besonders vorteilhaft und einfach hat sich eine Punktlinie erwiesen, also eine Linie, die durch eine Vielzahl von Punkten gebildet wird. Als Punkt wird hierin ein Objekt mit einer Ausdehnung größer Null verstanden, insbesondere eine durch einen Kreis mit einem Durchmesser größer Null begrenzte Fläche.

Die wenigstens eine mehrfach unterbrochene Linie kann gerade, also nicht gekrümmt ausgebildet sein. Alternativ kann die wenigstens eine mehrfach unterbrochene Linie auch wenigstens teilweise gekrümmt ausgebildet sein.

Die wenigstens eine mehrfach unterbrochene Linie kann Abschnitte oder Liniensegmente, insbesondere Punkte, umfassen, die jeweils eine maximale Ausdehnung von 0,5 µm bis 20 µm aufweisen. Es hat sich gezeigt, dass bei dieser Größenordnung der Liniensegmente, die durch Laserbestrahlung gebildet werden, die Entstehung von Verunreinigungen am effektivsten reduziert werden kann. Als maximale Ausdehnung kann bei einer Strichlinie insbesondere die Länge der Striche bezeichnet werden, bei einer strichpunktierten Linie die Länge der Linien bzw. der Durchmesser der Punkte und bei einer Punktlinie der Durchmesser der Punkte.

Die wenigstens eine mehrfach unterbrochene Linie kann insbesondere eine Vertiefung auf einer Oberfläche des Kunststoffkörpers bilden.

Zum Ausbilden der wenigstens einen mehrfach unterbrochenen Linie kann der Laser intermittierend oder gepulst betrieben werden. Alternativ kann durch ein Umlenkelement oder ein Blockierelement im Strahlengang des Lasers, der Laserstrahl periodisch so umgelenkt oder blockiert werden, dass er nicht auf den Kunststoffkörper trifft.

Das Ausbilden der Referenzstruktur kann insbesondere mit Hilfe eines Lasers mit einer Wellenlänge von 355 nm, einer Leistung von 140 mW bis 500 mW, einer Pulsdauer von 10 ps und einer Pulsfrequenz von 5 kHz bis 200 kHz durchgeführt werden.

Der durch den Laser erzeugte Laserstrahl kann relativ zum Kunststoffkörper bewegt werden. Dies kann durch eine entsprechende Ablenkoptik geschehen. Alternativ oder zusätzlich kann der Kunststoffkörper relativ zum Laserstrahl bewegt werden.

Das Ausbilden der Referenzstruktur kann insbesondere ein Erzeugen von mehreren, insbesondere wenigstens zwei, mehrfach unterbrochenen Linien mit Hilfe eines Lasers umfassen. Die mehreren mehrfach unterbrochenen Linien können dabei eines oder mehrere der oben genannten Merkmale aufweisen. Die mehreren mehrfach unterbrochenen Linien können sich wenigstens teilweise schneiden und/oder zusammenhängend ausgebildet sein. Alternativ können die mehreren mehrfach unterbrochenen Linien auch keine gemeinsamen Punkte aufweisen.

Das Ausbilden der Referenzstruktur kann insbesondere ein Erzeugen von wenigstens zwei parallelen mehrfach unterbrochenen Linien umfassen. Dadurch kann der Probenträger in mehrere Bereiche unterteilt werden, in denen Proben eingebracht werden können.

Erfindungsgemäss umfasst die Referenzstruktur auch ein Gitter oder Raster, wobei das Ausbilden der Referenzstruktur ein Erzeugen einer Mehrzahl von mehrfach unterbrochenen Linien umfasst, die das Gitter oder Raster bilden. In diesem Fall umfasst die Referenzstruktur mehrere in einer Richtung parallel zueinander angeordnete mehrfach unterbrochene Linien sowie mehrere in einer senkrechten Richtung dazu angeordnete mehrfach unterbrochene Linien, die einander so schneiden, dass ein Gitter oder Raster gebildet wird. Durch das Gitter oder Raster werden mehrere Teilbereiche zur Anordnung einer Probe gebildet.

Das Gitter oder Raster kann insbesondere eine Vertiefung auf einer Oberfläche des Kunststoffkörpers bilden.

Der Wiederholungsabstand (Gitterkonstante) zwischen den durch die mehrfach unterbrochenen Linien gebildeten Stege kann zwischen 10 µm und 2 mm, insbesondere zwischen 50 µm und 1000 µm, liegen. Das Gitter kann insbesondere ein Rechteckgitter, beispielsweise ein Quadratgitter, sein. Die Gitterzellen können auch unterschiedliche Größen aufweisen.

Die Referenzstruktur kann auch weitere Strukturen umfassen, die eine eindeutige Bezeichnung einer jeden Gitterzelle ermöglichen. Insbesondere kann die Referenzstruktur eine Reihenkennzeichnung und/oder eine Spaltenkennzeichnung umfassen, die durch mehrfach unterbrochene Linien gebildet werden. Beispielsweise können die Reihen des Gitters mit Zahlen versehen werden und die Spalten des Gitters mit Buchstaben oder umgekehrt. Auch eine Kombination von Zahlen und Buchstaben ist für die Kennzeichnungen der Spalten und/oder Reihen möglich. Auch andere Kennzeichnungen der Spalten und Reihen sind möglich.

Die Referenzstruktur, insbesondere die wenigstens eine mehrfach unterbrochene Linie, kann insbesondere auf einer Oberfläche des Kunststoffkörpers ausgebildet werden. Der Bereich der Oberfläche, in dem die Referenzstruktur angeordnet ist, kann im Betrieb des Probenträgers dazu vorgesehen sein, die zu untersuchende Probe aufzunehmen.

Der Laser kann alternativ auch so fokussiert werden, dass die Referenzstruktur, insbesondere die wenigstens eine mehrfach unterbrochene Linie, unterhalb der Oberfläche des Kunststoffkörpers, insbesondere innerhalb des Kunststoffkörpers, gebildet wird. Dadurch kann besonders vorteilhaft vermieden werden, dass sich Kunststofffragmente lösen und sich als Verunreinigungen an der Oberfläche des Kunststoffkörpers ablagern.

Die Referenzstruktur kann insbesondere 2 µm bis 100 µm, insbesondere 10 µm bis 20 µm, unterhalb der Oberfläche des Kunststoffkörpers gebildet werden. Der Abstand kann ausgehend von der Oberfläche, auf die der Laser gerichtet wird, gemessen werden. Der Abstand kann auch ausgehend von der Oberfläche, auf der im Betrieb die zu untersuchende Probe angeordnet wird, gemessen werden. Durch diese Maßnahme kann sich die Referenzstruktur so nahe an der Oberfläche, an der die Zellen anzuordnen sind, befinden, dass die Referenzstruktur in einer Fokalebene mit der Oberfläche liegt. Der genaue Abstand der Referenzstruktur zur Oberfläche kann auf das Objektiv abgestimmt werden, welches zur Mikroskopie verwendet wird oder werden soll.

Der Kunststoffkörper kann insbesondere in Form einer Platte oder Folie ausgebildet sein. Diese Platte oder Folie kann eine Dicke von 1 µm bis 500 µm, vorzugsweise 100 µm bis 200 µm, aufweisen. Eine solche Platte oder Folie eignet sich in vorteilhafter Weise für die Anwendung der inversen Mikroskopie.

Der Probenträger kann auch aus einer solchen Platte oder Folie bestehen.

Der Kunststoffkörper kann aus einem transparenten Kunststoff gebildet werden. Auch dies ist besonders vorteilhaft für die Anwendung inverser Mikroskopie.

Der Kunststoffkörper kann insbesondere COC (Cyclo-Olefin Copolymer), COP (Cyclo-Olefin Polymer), PE (Polyethylen), PS (Polystyrol), PC (Polycarbonat) und/oder PMMA (Polymethylmetacrylat) umfassen oder daraus bestehen. Diese Kunststoffe sind besonders geeignet zur Verwendung in der hochauflösenden Mikroskopie. Der Kunststoff des Kunststoffkörpers kann eine vorherbestimmte Eigenfluoreszenz, insbesondere kleiner oder gleich der Eigenfluoreszenz von COC oder COP oder eines herkömmlichen Deckglases (beispielsweise reinweißes Glas der hydrolytischen Klasse 1 (wie D 263 M Schott Glas, Nr. 1.5H (170 +/- 5 µm)), und/oder einen vorherbestimmten Brechungsindex, insbesondere > 1,2 und/oder < 1,7, aufweisen. Ein solcher optisch hochwertiger Kunststoff kann Mikroskopieuntersuchungen verbessern, insbesondere bei der Anwendung von Fluoreszenzmikroskopie.

Erfindungsgemäss umfasst der Kunststoffkörper auch ein Reservoir zum Aufnehmen einer Flüssigkeit und/oder Probe oder ist mit einem weiteren Element zur Bildung eines solchen Reservoirs verbunden, wobei die Referenzstruktur im oder am Boden des Reservoirs ausgebildet wird. Insbesondere kann die Referenzstruktur an der Innenseite des Bodens ausgebildet sein, also auf der Oberfläche des Bodens, die zum Inneren des Reservoirs weist, oder an der Außenseite des Bodens, also auf der Oberfläche des Bodens, die vom Inneren des Reservoirs weg weist. Mit anderen Worten umfasst der herzustellende Probenträger wenigstens ein Flüssigkeitsreservoir, das so ausgebildet ist, dass an dessen Boden eine Probe zur Untersuchung mittels eines Mikroskops anordenbar ist, wobei sich die Referenzstruktur ganz oder teilweise in diesem Bereich des Bodens befindet, in dem die Probe anordenbar ist. In diesem Fall kann der Probenträger auch als Probenkammer bezeichnet werden. Der Bereich des Bodens, in dem die Probe anordenbar ist, kann beispielsweise in Form einer Vertiefung ausgebildet sein.

Falls der Probenträger durch die Verbindung des Kunststoffkörpers mit einem weiteren Element gebildet wird, kann das weitere Element ebenfalls einen Kunststoff oder ein anderes Material, etwa Glas, umfassen oder daraus bestehen.

Der Probenträger kann auch mehrere, insbesondere 2, 4, 8, 12, 14, 48, 96, 384 oder 1536 Reservoire aufweisen. Diese Reservoire können rund oder rechteckig ausgebildet sein. In jedem der Reservoire kann eine Referenzstruktur wie hierin beschrieben vorgesehen sein.

Der Kunststoffkörper kann durch ein Spritzgussverfahren gebildet werden. Wenn ein weiteres Element zur Bildung wenigstens eines Reservoirs vorgesehen wird, kann dieses direkt am Kunststoffkörper angespritzt werden. Auch ein Zweikomponentenspritzgussverfahren ist möglich, wenn unterschiedliche Kunststoffe verwendet werden sollen. Es ist aber auch möglich, eine oben beschriebene Folie als Kunststoffkörper zu verwenden und diese auf ein weiteres Kunststoffelement zur Bildung wenigstens eines Reservoirs aufzubringen, insbesondere aufzukleben.

Die Erfindung stellt außerdem einen Probenträger aus Kunststoff gemäß Anspruch 8 bereit.

Der Probenträger wird durch ein oben beschriebenes Verfahren erhalten, insbesondere direkt oder unmittelbar erhalten.

Der Probenträger umfasst wenigstens ein Reservoir zur Aufnahme einer Probe und/oder Flüssigkeit, wobei die Referenzstruktur im oder am Boden des Reservoirs ausgebildet ist. Der Probenträger kann auch einen Deckel umfassen, mit welchem wenigstens ein Reservoir verschlossen werden kann. Der Deckel kann fluchtend oder nicht fluchtend ausgeführt sein. Durch den Deckel kann die Sterilität der Probe in dem Reservoir verbessert werden.

Die Erfindung stellt außerdem einen Probenträger aus Kunststoff bereit, umfassend eine Referenzstruktur zum Lokalisieren einer Probe, wobei die Referenzstruktur unterhalb einer Oberfläche des Probenträgers ausgebildet ist. Insbesondere kann die Referenzstruktur mittels eines Lasers gebildet sein.

Durch diese Maßnahme kann vorteilhaft vermieden werden, dass sich Kunststofffragmente lösen und sich als Verunreinigungen an der Oberfläche des Kunststoffkörpers ablagern, selbst wenn die Referenzstruktur durch eine oder mehrere durchgezogene Linien gebildet wird.

Die Referenzstruktur kann sich 2 µm bis 100 µm, insbesondere 10 µm bis 20 µm, unterhalb der Oberfläche des Probenträgers befinden. Der Abstand kann ausgehend von der Oberfläche gemessen werden, auf der im Betrieb die zu untersuchende Probe angeordnet wird. Durch diese Maßnahme kann sich die Referenzstruktur so nahe an der Oberfläche, an der die Zellen anzuordnen sind, befinden, dass die Referenzstruktur in einer Fokalebene mit der Oberfläche liegt. Der genaue Abstand der Referenzstruktur zur Oberfläche kann auf das Objektiv abgestimmt werden, welches zur Mikroskopie verwendet wird oder werden soll.

Beschrieben wird ebenfalls ein nicht-erfindungsgemässes Verfahren zum Herstellen eines Probenträgers aus Kunststoff, umfassend die Schritte:
Bereitstellen eines Kunststoffkörpers; und
Ausbilden einer Referenzstruktur innerhalb des Kunststoffkörpers mittels eines Lasers.

Das Ausbilden der Referenzstruktur kann insbesondere ein Erzeugen wenigstens einer Linie mit Hilfe des Lasers umfassen.

Dadurch, dass die Referenzstruktur nicht an der Oberfläche des Kunststoffkörpers, sondern innerhalb des Kunststoffkörpers gebildet wird, kann vorteilhaft vermieden werden, dass sich Kunststofffragmente lösen und sich als Verunreinigungen an der Oberfläche des Kunststoffkörpers ablagern, selbst wenn die Referenzstruktur durch eine oder mehrere durchgezogene Linien gebildet wird.

Der Laser kann insbesondere so fokussiert werden, dass die Referenzstruktur, insbesondere die wenigstens eine Linie, unterhalb der Oberfläche des Kunststoffkörpers gebildet wird. Die Referenzstruktur kann insbesondere 2 µm bis 100 µm, insbesondere 10 µm bis 20 µm, unterhalb der Oberfläche des Kunststoffkörpers gebildet werden. Der Abstand kann ausgehend von der Oberfläche, auf die der Laser gerichtet wird, gemessen werden. Der Abstand kann auch ausgehend von der Oberfläche, auf der im Betrieb die zu untersuchende Probe angeordnet wird, gemessen werden. Durch diese Maßnahme kann sich die Referenzstruktur so nahe an der Oberfläche, an der die Zellen anzuordnen sind, befinden, dass die Referenzstruktur in einer Fokalebene mit der Oberfläche liegt. Der genaue Abstand der Referenzstruktur zur Oberfläche kann auf das Objektiv abgestimmt werden, welches zur Mikroskopie verwendet wird.

Das Verfahren kann eines oder mehrere der oben genannten Merkmale aufweisen, wobei jedoch die Referenzstruktur keine mehrfach unterbrochene Linie umfassen muss, sondern auch aus einer oder mehreren durchgezogenen Linien bestehen kann.

Beschrieben wird außerdem eine Verwendung eines oben beschriebenen Probenträgers für eine mikroskopische Untersuchung einer Probe, insbesondere mittels Fluoreszenzmikroskopie, konfokaler Mikroskopie oder Durchlichtmikroskopie, wobei eine Probe, insbesondere Zellen, auf einer Oberfläche des Probenträgers angeordnet wird und wobei im Bereich, in dem die Probe angeordnet wird, die Referenzstruktur auf oder unter der Oberfläche angeordnet ist. Weitere Merkmale und Vorteile werden nachfolgend anhand der beispielhaften Figuren beschrieben. Dabei zeigt:
- Figur 1: einen beispielhaften Probenträger aus Kunststoff mit einer Referenzstruktur;
- Figur 2: einen Ausschnitt einer Referenzstruktur, welche durch ein erfindungsgemäßes Verfahren erhalten wurde; und
- Figur 3: einen Ausschnitt einer beispielhaften Referenzstruktur gemäß dem Stand der Technik.

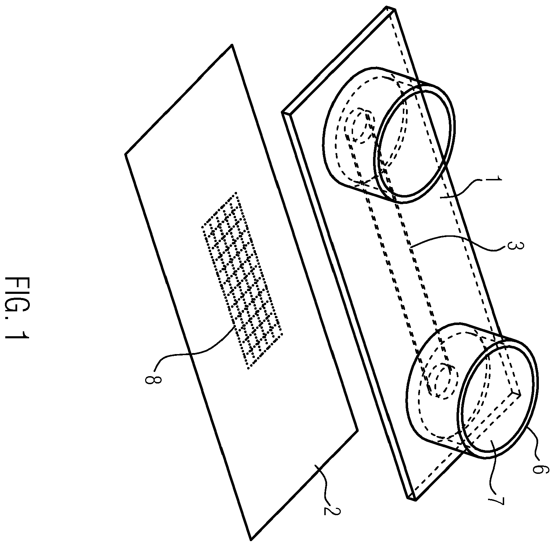

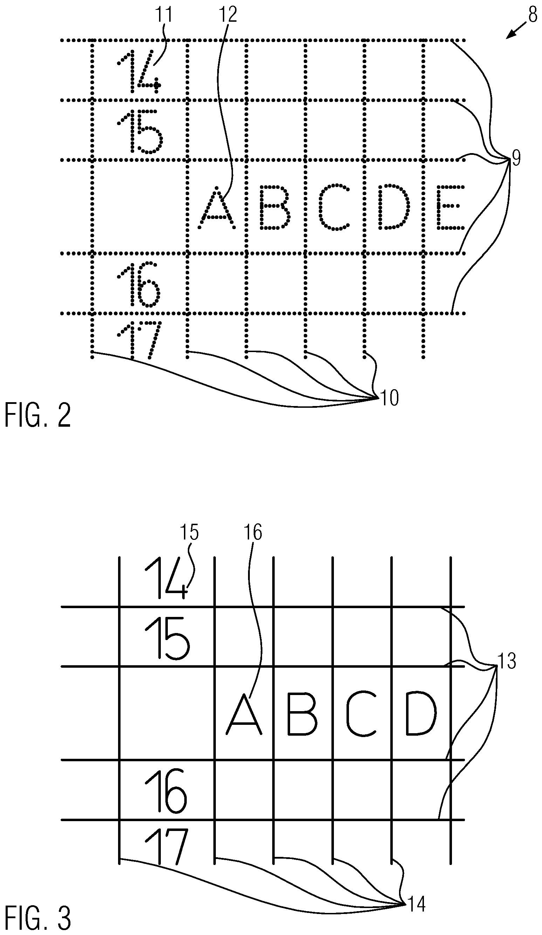

Figur 3 illustriert eine Referenzstruktur, wie sie im Stand der Technik verwendet wurde. Dabei ist ein Raster oder Gitter zu erkennen, welches durch mehrere parallele horizontale Linien 13 sowie mehrere parallele vertikale Linien 14 gebildet wird. Diese Linien sind dabei als durchgehende, also nicht unterbrochene Linien ausgebildet. Außerdem sind in Figur 1 noch Reihenkennzeichnungen 15 in Form von Zahlen und Spaltenkennzeichnungen 16 in Form von Buchstaben vorgesehen. Dadurch ist eine eindeutige Bezeichnung der einzelnen Gitterzellen möglich. Sowohl die Reihenkennzeichnungen als auch die Spaltenkennzeichnungen sind wiederum mit Hilfe von durchgehenden, nicht unterbrochenen Linien ausgebildet. Die Linien der Referenzstruktur werden gemäß Stand der Technik mit einem Laser, insbesondere einem kontinuierlich arbeitenden Laser gebildet.

Demgegenüber wird beim erfindungsgemäßen Verfahren zum Herstellen eines Probenträgers aus Kunststoff zunächst ein Kunststoffkörper bereitgestellt. Dieser kann beispielsweise in Form einer Platte oder Folie vorliegen. Im oder auf dem Kunststoffkörper wird dann eine Referenzstruktur ausgebildet, wobei das Ausbilden der Referenzstruktur ein Erzeugen wenigstens einer mehrfach unterbrochenen Linie mit Hilfe eines Lasers umfasst.

Figur 1 illustriert schematisch einen Probenträger, der durch ein erfindungsgemäßes Verfahren erhalten wurde. Der Probenträger umfasst einen Kunststoffkörper 2 in Form einer Bodenplatte. Außerdem ist ein weiteres Element in Form einer Deckplatte 1 vorgesehen. Diese Deckplatte 1 weist eine Vertiefung 3 in Form einer Nut sowie zwei Erhöhungen 6, in denen jeweils eine Ausnehmung 7 ausgebildet ist, auf.

Wenn die Bodenplatte 2 mit der Deckplatte 1 verbunden wird, werden dadurch insgesamt drei Reservoire für Proben und/oder Flüssigkeiten gebildet. Die durch die Erhöhungen 6 und Ausnehmungen 7 gebildeten Reservoire sind nach oben hin offen, während durch die Nut 3 in Verbindung mit der Bodenplatte 2 ein sogenannter Beobachtungskanal gebildet wird, also ein Reservoir in Form eines Hohlraums. In diesem Kanal ist die zu beobachtende Probe im Betrieb des Bodenträgers üblicherweise angeordnet, insbesondere als Suspension in einer Flüssigkeit.

Die Bodenplatte 2 kann eine Dicke von 1 µm bis 500 µm, vorzugsweise 100 µm bis 200 µm, aufweisen. Die Bodenplatte 2 kann insbesondere COC (Cyclo-Olefin Copolymer), COP (Cyclo-Olefin Polymer), PE (Polyethylen), PS (Polystyrol), PC (Polycarbonat) und/oder PMMA (Polymethylmetacrylat) umfassen oder daraus bestehen. Der Kunststoff des Kunststoffkörpers kann eine vorherbestimmte Eigenfluoreszenz, insbesondere kleiner oder gleich der Eigenfluoreszenz von COC oder COP oder eines herkömmlichen Deckglases (beispielsweise D 263 M Schott Glas, Nr. 1.5H (170 +/- 5 µm)), und/oder einen vorherbestimmten Brechungsindex, insbesondere > 1,2 und/oder < 1,7, aufweisen.

Auf der Bodenplatte 2 ist eine Referenzstruktur 8 in Form eines Gitters dargestellt. Dieses Gitter ist mit Hilfe eines Lasers in Form mehrerer mehrfach unterbrochener Linien ausgebildet.

Die Referenzstruktur 8 ist auf der Oberfläche der Bodenplatte 2 ausgebildet, die in Richtung der Nut 3 und damit in Richtung des Reservoirs weist. Dadurch ist die Referenzstruktur 8 im zusammengesetzten Probenträger am Boden des Reservoirs, das durch die Bodenplatte 2 und die Nut 3 gebildet wird, angeordnet.

In Figur 2 ist eine entsprechende Referenzstruktur 8, welche aus mehreren mehrfach unterbrochenen Linien besteht, ausschnittsweise dargestellt. Insbesondere besteht die beispielhafte Referenzstruktur der Figur 2 aus einer Vielzahl von Punktlinien, wobei die Punkte einen konstanten Durchmesser aufweisen, der im Bereich von 0,5 µm bis 20 µm liegen kann.

Bei dem beispielhaften Ausschnitt der Figur 2 ist die Referenzstruktur in Form eines Gitters oder Rasters ausgebildet, das eine Mehrzahl von parallelen horizontalen Linien 9 und eine Mehrzahl paralleler vertikaler Linien 10 umfasst. Diese Linien sind alle als Punktlinien ausgebildet.

Auch sind Reihenkennzeichnungen 11 und Spaltenkennzeichnungen 12 vorgesehen, insbesondere in Form von Zahlen und Buchstaben. Im Gegensatz zum Stand der Technik sind jedoch auch diese Reihen- und Spaltenkennzeichnungen aus Punktlinien gebildet.

Durch die Verwendung von Punktlinien können Verunreinigungen außerhalb des mit Laserlichts bearbeiteten Bereichs der Oberfläche des Kunststoffkörpers reduziert oder ganz vermieden werden. Dies ist insbesondere für den Einsatz von hochauflösender Mikroskopie vorteilhaft.

Die Punktlinien der Figur 2 wurden mit einem Laser mit einer Wellenlänge von 355 nm, einer Leistung von 140 mW bis 500 mW, einer Pulsdauer von 10 ps eine Pulsfrequenz von 5 kHz bis 200 kHz gebildet.

Der Laser kann insbesondere so fokussiert werden, dass die Referenzstruktur 8 unterhalb der Oberfläche des Kunststoffkörpers gebildet wird. Die Referenzstruktur 8 kann insbesondere 2 µm bis 100 µm, insbesondere 10 µm bis 20 µm, unterhalb der Oberfläche des Kunststoffkörpers gebildet werden.

Der Abstand kann ausgehend von der Oberfläche, auf die der Laser gerichtet wird, gemessen werden. Der Abstand kann auch ausgehend von der Oberfläche, auf der im Betrieb die zu untersuchende Probe angeordnet wird, gemessen werden, in dem Ausführungsbeispiel also die Oberfläche der Bodenplatte 2, die in Richtung der Vertiefung oder Nut 3 und der Ausnehmungen 7 weist.

Durch diese Maßnahme kann sich die Referenzstruktur so nahe an der Oberfläche, an der die Probe, beispielsweise in Form von Zellen, anzuordnen sind, befinden, dass die Referenzstruktur in einer Fokalebene mit der Oberfläche liegt. Der genaue Abstand der Referenzstruktur zur Oberfläche kann auf das Objektiv abgestimmt werden, welches zur Mikroskopie verwendet wird.

Wenn die Referenzstruktur derart im Inneren des Probenträgers, insbesondere innerhalb der Bodenplatte 2 gebildet wird, muss die nicht-erfindungsgemässe Referenzstruktur keine mehrfach unterbrochene Linie umfassen, sondern kann beispielsweise auch aus einer oder mehreren durchgezogenen Linien bestehen.

Dadurch, dass die Referenzstruktur nicht an der Oberfläche des Kunststoffkörpers, sondern innerhalb des Kunststoffkörpers gebildet wird, kann nämlich vermieden werden, dass sich Kunststofffragmente lösen und sich als Verunreinigungen an der Oberfläche des Kunststoffkörpers ablagern, selbst wenn die Referenzstruktur durch eine oder mehrere durchgezogene Linien gebildet wird. Wenn sich die Referenzstruktur innerhalb der Bodenplatte 2 befindet, kann sie also beispielsweise auch wie in Figur 3 gezeigt ausgebildet sein.

Es versteht sich, dass die zuvor beschriebenen Merkmale auch in anderer Weise miteinander kombiniert werden können. Insbesondere ist die Geometrie des Probenträgers nicht auf die in der Figur 1 gezeigte Geometrie beschränkt. Auch andere Geometrien, etwa die von Petrischalen oder Multiwellplatten wie in "DIN EN ISO 24998" oder "ANSI/SBS 2-2004 for microplates" beschrieben, sind denkbar. Auch kann die Referenzstruktur in vielerlei Gestaltung ausgeführt sein und ist nicht auf die Form eines Gitters beschränkt.

## Patentansprüche

1. Verfahren zum Herstellen eines Probenträgers aus Kunststoff, umfassend die Schritte:
Bereitstellen eines Kunststoffkörpers (2); und
Ausbilden einer Referenzstruktur (8) im oder auf dem Kunststoffkörper (2);
**dadurch gekennzeichnet, dass**
das Ausbilden der Referenzstruktur (8) ein Erzeugen wenigstens einer mehrfach unterbrochenen Linie (9, 10, 11, 12) mit Hilfe eines Lasers umfasst;
wobei der Kunststoffkörper ein Reservoir zum Aufnehmen einer Probe und/oder Flüssigkeit umfasst oder mit einem weiteren Element zur Bildung eines solchen Reservoirs verbunden wird, und wobei die Referenzstruktur im oder am Boden des Reservoirs ausgebildet wird; und
wobei die Referenzstruktur ein Gitter oder Raster umfasst, wobei das Ausbilden der Referenzstruktur ein Erzeugen einer Mehrzahl von mehrfach unterbrochenen Linien umfasst, die das Gitter oder Raster bilden.

2. Verfahren nach Anspruch 1, wobei die wenigstens eine mehrfach unterbrochene Linie eine Punktlinie, eine Strichlinie oder eine strichpunktierte Linie ist.

3. Verfahren nach Anspruch 1 oder 2, wobei die wenigstens eine mehrfach unterbrochene Linie Abschnitte umfasst, die jeweils eine maximale Ausdehnung von 0,5 µm bis 20 µm aufweisen.

4. Verfahren nach einem der vorangegangenen Ansprüche, wobei der Laser eine Wellenlänge von 355 nm, eine Leistung von 140 mW bis 500 mW, eine Pulsdauer von 10 ps und eine Pulsfrequenz von 5 kHz bis 200 kHz aufweist.

5. Verfahren nach einem der vorangegangenen Ansprüche, wobei der Laser so fokussiert wird, dass die Referenzstruktur unterhalb der Oberfläche des Kunststoffkörpers gebildet wird.

6. Verfahren nach Anspruch 5, wobei die Referenzstruktur 2 µm bis 100 µm, insbesondere 10 µm bis 20 µm, unterhalb der Oberfläche des Kunststoffkörpers gebildet wird.

7. Verfahren nach einem der vorangegangenen Ansprüche, wobei der Kunststoffkörper aus einem transparenten Kunststoff gebildet ist.

8. Probenträger aus Kunststoff, umfassend eine Referenzstruktur zum Lokalisieren einer Probe, wobei die Referenzstruktur wenigstens eine mehrfach unterbrochene Linie umfasst, wobei der Probenträger wenigstens ein Reservoir zur Aufnahme einer Probe und/oder Flüssigkeit umfasst, wobei die Referenzstruktur im oder am Boden des Reservoirs ausgebildet ist, und wobei der Probenträger durch ein Verfahren nach einem der Ansprüche 1 - 7 erhalten wurde.

## Claims

1. A method for producing a sample carrier made of plastic, comprising the steps of:
providing a plastic body (2); and
forming a reference structure (8) in or on the plastic body (2),
**characterized in that**
the formation of the reference structure (8) comprises generating at least one multiply interrupted line (9, 10, 11, 12) with the aid of a laser,
wherein the plastic body comprises a reservoir for receiving a sample and/or liquid or is connected to a further element for forming such a reservoir, and wherein the reference structure is formed in or on the bottom of the reservoir, and
wherein the reference structure comprises a grid or raster, wherein the formation of the reference structure comprises generating a plurality of multiply interrupted lines which form the grid or raster.

2. Method according to claim 1, wherein the at least one multiply interrupted line is a dotted line, a dashed line or a dash-dotted line.

3. Method according to claim 1 or 2, wherein the at least one multiply interrupted line comprises sections each having a maximum expansion of 0.5 µm to 20 µm.

4. Method according to any of the preceding claims, wherein the laser has a wavelength of 355 nm, a power of 140 mW to 500 mW, a pulse duration of 10 ps and a pulse frequency of 5 kHz to 200 kHz.

5. Method according to one of the preceding claims, wherein the laser is focused such that the reference structure is formed under the surface of the plastic body.

6. Method according to claim 5, wherein the reference structure is formed 2 µm to 100 µm, in particular 10 µm to 20 µm, below the surface of the plastic body.

7. Method according to one of the preceding claims, wherein the plastic body is formed from a transparent plastic.

8. Sample carrier made of plastic, comprising a reference structure for locating a sample, wherein the reference structure comprises at least one multiply interrupted line, wherein the sample carrier comprises at least one reservoir for receiving a sample and/or liquid, wherein the reference structure is formed in or on the bottom of the reservoir, and wherein the sample carrier has been obtained by a method according to one of claims 1 to 7.

## Revendications

1. Procédé de fabrication d'un porte-échantillon en matière plastique, comprenant les étapes suivantes :
fourniture et préparation d'un corps de matière plastique (2) ; et
élaboration d'une structure de référence (8) dans ou sur le corps de matière plastique (2) ;
**caractérisé en ce que**
l'élaboration de la structure de référence (8) comprend la réalisation d'au moins une ligne (9, 10, 11, 12) interrompue de manière multiple, à l'aide d'un laser ; procédé
d'après lequel le corps de matière plastique comporte un réservoir destiné à accueillir un échantillon et/ou un liquide, ou bien est relié à un autre élément pour former un tel réservoir, et la structure de référence étant élaborée dans ou sur le fond du réservoir ; et d'après lequel la structure de référence comprend une grille ou un quadrillage, l'élaboration de la structure de référence comprenant la réalisation d'une pluralité de lignes interrompues de manière multiple, qui forment la grille ou le quadrillage.

2. Procédé selon la revendication 1, d'après lequel ladite au moins une ligne interrompue de manière multiple est une ligne de points, une ligne de tirets ou une ligne mixte de points et de tirets.

3. Procédé selon la revendication 1 ou la revendication 2, d'après lequel ladite au moins une ligne interrompue de manière multiple comprend des tronçons, qui présentent respectivement une étendue maximale de 0,5 µm à 20 µm.

4. Procédé selon l'une des revendications précédentes, d'après lequel le laser présente une longueur d'onde de 355 nm, une puissance de 140 mW à 500 mW, une durée d'impulsion de 10 ps et une fréquence de pulsation de 5 kHz à 200 kHz.

5. Procédé selon l'une des revendications précédentes, d'après lequel le laser est focalisé de manière telle, que la structure de référence soit formée sous la surface du corps de matière plastique.

6. Procédé selon la revendication 5, d'après lequel la structure de référence est formée de 2 µm à 100 µm, notamment de 10 µm à 20 µm, sous la surface du corps de matière plastique.

7. Procédé selon l'une des revendications précédentes, d'après lequel le corps de matière plastique est réalisé en une matière plastique transparente.

8. Porte-échantillon en matière plastique, comprenant une structure de référence pour localiser un échantillon, la structure de référence comportant au moins une ligne interrompue de manière multiple, le porte-échantillon comprenant au moins un réservoir destiné à accueillir un échantillon et/ou un liquide, la structure de référence étant élaborée dans ou sur le fond du réservoir, et le porte-échantillon ayant été obtenu par un procédé selon l'une des revendications 1 - 7.
